**Europäisches Patentamt**

**European Patent Office**

**Office européen des brevets**

(19)

(11) Veröffentlichungsnummer: **0 113 859**
**B1**

# (12) EUROPÄISCHE PATENTSCHRIFT

(45) Veröffentlichungstag der Patentschrift:
**27.08.86**

(21) Anmeldenummer: **83112347.6**

(22) Anmeldetag: **08.12.83**

(51) Int. Cl.⁴: **F 16 B 37/12**

(54) **Selbstschneidender Gewindeeinsatz.**

(30) Priorität: 14.01.83 DE 3301088
14.04.83 DE 8311052 U

(43) Veröffentlichungstag der Anmeldung:
**25.07.84 Patentblatt 84/30**

(45) Bekanntmachung des Hinweises auf die Patenterteilung:
**27.08.86 Patentblatt 86/35**

(84) Benannte Vertragsstaaten:
**AT BE CH FR GB IT LI NL SE**

(56) Entgegenhaltungen:
**DE - A - 2 042 038**
**DE - A - 2 630 343**
**DE - B - 2 415 941**

**Druckschrift Nr. 30 der Kerb-Konus-Vertriebs-GmbH**

(73) Patentinhaber: **Kerb-Konus-Vertriebs-GmbH, Dr. Carl-Eibes-Strasse, D-8454 Schnaittenbach (DE)**

(72) Erfinder: **Stöveken, Bernhard, Rathausstrasse 31, D-8451 Haselmühl (DE)**

(74) Vertreter: **Charrier, Rolf, Dipl.-Ing., Postfach 260 Rehlingenstrasse 8, D-8900 Augsburg 31 (DE)**

ACTORUM AG

## Beschreibung

Die Erfindung betrifft einen selbstschneidenden Gewindeeinsatz mit einem Aussengewinde, mit einer Anfasung am Einsatzende, die das Aussengewinde schneidet, sowie mit Einschnitten im Bereich der Anfasung, welche Gewindeschneidkanten bilden, die beim Eindrehen des Gewindeeinsatzes in eine glatte Aufnahmebohrung dort ein Innengewinde einschneiden, der Gewindeeinsatz eine über seine ganze Länge verlaufende Bohrung mit einem Innengewinde aufweist und die Einschnitte zur Stirnseite des Einsatzendes hin gegen einen Spanaustritt in die Aufnahmebohrung abgeschlossen sind.

Gewindeeinsätze werden in glatte Aufnahmebohrungen eingeschraubt, wobei die Gewindeschneidkanten dort ein Innengewinde einschneiden. Die Einschnitte im Bereich der konischen Anfasung können hierbei aus radialen Bohrungen bestehen oder es handelt sich bei den Einschnitten um eine querverlaufende Durchfräsung. Üblicherweise sind drei um 120° versetzt zueinander angeordnete Bohrungen vorgesehen (Druckschrift Nr. 30 der Kerb-Konus-Vertriebs-GmbH).

Beim Einschrauben des Gewindeeinsatzes in eine Aufnahmebohrung entstehen an den Gewindeschneidkanten Späne. Diese Späne sind bei einer Reihe von Anwendungsfällen unerwünscht, da sie die Funktion der Geräte beeinträchtigen können, in denen diese Gewindeeinsätze verwendet werden. Dies gilt insbesondere bei elektronischen Geräten. Um zu verhindern, dass die beim Einsetzen entstehenden Späne in das Gerät gelangen, muss die Aufnahmebohrung als Sacklochbohrung ausgeführt sein. Bei zahlreichen Anwendungsfällen ist es jedoch nicht möglich, die Aufnahmebohrung als Sacklochbohrung auszubilden, insbesondere dann nicht, wenn die Wandstärke des Materials, in dem die Aufnahmebohrung angeordnet ist, gleich oder kleiner ist als die Höhe des Gewindeeinsatzes. Hierbei ist anzumerken, dass die Aufnahmebohrung eine bestimmte Mindesttiefe aufweisen muss, damit die Gewindeeinsätze einen festen Halt in der Aufnahmebohrung finden.

Bei dem in der DE-A-2 630 343 gezeigten und beschriebenen Gewindeeinsatz sind drei axial über die gesamte Länge des Gewindeeinsatzes verlaufende Einschnitte vorgesehen. Die Tiefe dieser Einschnitte ist grösser als die Höhe des Aussengewindes. Um das Eindringen von Spänen in die Aufnahmebohrung zu vermeiden, muss der Durchmesser der Aufnahmebohrung gleich oder kleiner gewählt werden als der gedachte Kreis, auf welchem die Grundflächen der Einschnitte liegen.

Dieser Gewindeeinsatz ist nur zum Einsatz in eng tolerierte Aufnahmebohrungen geeignet, deren Wandung aus relativ weichem Material wie beispielsweise Kunststoff bestehen, da beim Einschrauben eine relativ hohe Zerspanarbeit zu leisten ist. Beim Einsetzen in hartes Material verhindern die relativ grossen Späne, die sich an den Wandungen der Einschnitte abstützen, ein weiteres Einschrauben. Beim Einschrauben in harte Materialien wird deshalb der Durchmesser der Aufnahmebohrung um so grösser gewählt je härter das Material der Aufnahmebohrung ist, was jedoch dann bei diesem Gewindeeinsatz zu dem Nachteil führt, dass der Bohrungsdurchmesser grösser wird als der vorerwähnte gedachte Kreis und somit Späne in die Aufnahmebohrung gelangen können.

Es besteht die Aufgabe, die eingangs genannten Gewindeeinsätze so zu verbessern, dass sie insbesondere auch in Aufnahmebohrungen einsetzbar sind, deren Wandungen aus einem relativ harten Werkstoff bestehen.

Bei einem Gewindeeinsatz der eingangs genannten Art wird diese Aufgabe durch die kennzeichnenden Merkmale des Anspruches 1 oder des Anspruches 6 gelöst. Vorteilhafte Ausgestaltungen sind den davon abhängigen Unteransprüchen entnehmbar.

Ausführungsbeispiele werden nachfolgend anhand der Zeichnungen näher erläutert. Es zeigen:

Fig. 1 einen Längsschnitt durch eine erste Form eines Gewindeeinsatzes mit radialen Sackbohrungen als Einschnitte;

Fig. 2 einen Schnitt längs der Linie II-II in Fig. 1;

Fig. 3 einen Längsschnitt durch eine zweite Ausführungsform ebenfalls mit radialen Sackbohrungen als Einschnitte;

Fig. 4 einen Längsschnitt durch eine dritte Ausführungsform mit einer die Einschnitte bildenden Durchfräsung;

Fig. 5 einen Schnitt längs der Linie V-V in Fig. 4;

Fig. 6 einen Längschnitt durch eine vierte Ausführungsform mit zwei axial verlaufenden Nuten als Einschnitte;

Fig. 7 eine Ansicht in Pfeilrichtung VII in Fig. 6;

Fig. 8 eine Ansicht in Pfeilrichtung VIII in Fig. 6;

Fig. 9 einen Längsschnitt durch einen Gewindeeinsatz analog demjenigen nach Fig. 1 und 2 und

Fig. 10 einen Teilschnitt bei in eine Aufnahmebohrung eingesetztem Einsatz.

Alle in der Zeichnung dargestellten Gewindeeinsätze weisen ein Aussengewinde 1 und ein schematisch dargestelltes Innengewinde 2 auf. Am Einsatzende 3 sind die Gewindeeinsätze mit einer konischen Anfasung 4 versehen, welche das Aussengewinde 1 schneidet.

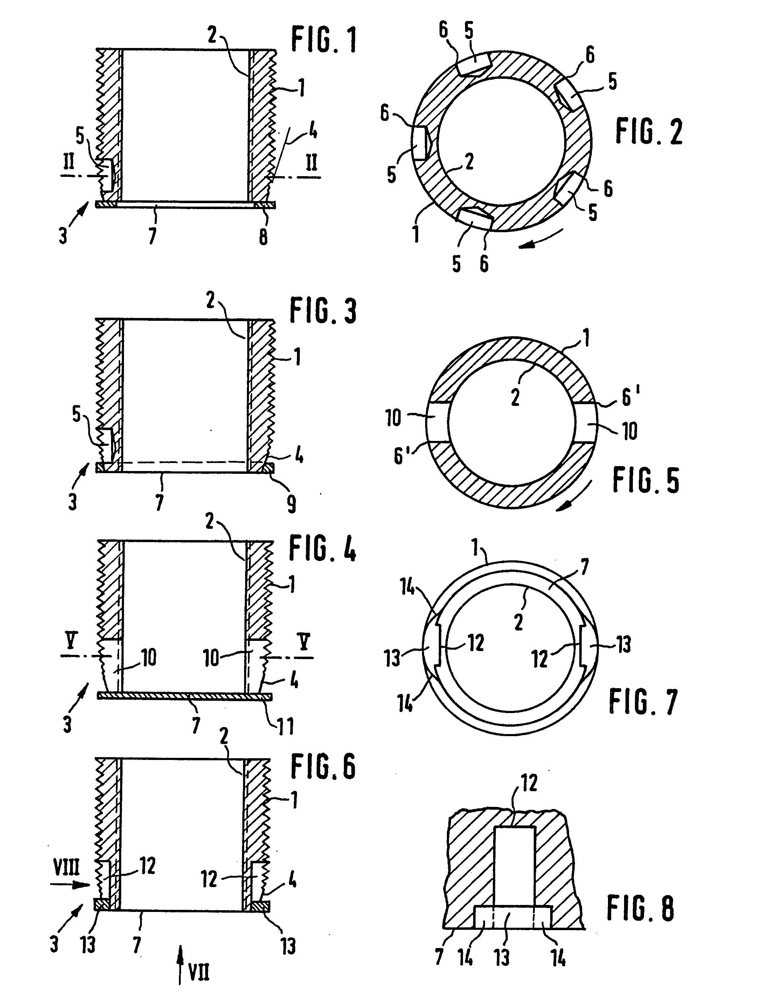

Bei den Ausführungsbeispielen nach den Fig. 1 bis 3 sind im Bereich der konischen Anfasung radial verlaufende Sacklochbohrungen 5 vorgesehen. Deren in Eindrehrichtung (siehe Pfeil in Fig. 2) gesehenen Hinterkanten bilden die Gewindeschneidkanten 6.

Um zu verhindern, dass die sich bildenden Späne in die Aufnahmebohrung austreten können, ist gem. Fig. 1 an der Stirnseite 7 des Einsatzendes 3 ein flacher Dichtring 8 angebracht. Dessen Aussendurchmesser verläuft etwa in Höhe der Gewindespitzen des Aussengewindes 1, bevorzugt ist er etwa 7% kleiner als der Durchmesser der Gewindespitzen des Aussengewindes 1. Sein Durchmesser entspricht somit dem Maximaldurchmesser einer Aufnahmebohrung, in welche der Gewindeeinsatz eingeschraubt wird. Der Innendurchmesser des Dichtringes 8 ist grösser als der Gewindegrunddurchmesser des Innengewindes 2.

Bei der Ausführungsform nach Fig. 3 ist der Dichtring 9 am Aussenumfang des vorderen Endes des Einsatzendes 3 angeordnet. Bezüglich der Verhältnisse des Aussendurchmessers dieses Dichtringes 9 gilt das Gleiche, wie in Zusammenhang mit Fig. 1 erläutert.

Wie aus Fig. 2 ersichtlich, sind insgesamt fünf Sacklochbohrungen 5 gleichmässig über den Umfang des Gewindeeinsatzes verteilt vorgesehen.

Sind anstelle der Sacklochbohrungen 5 Durchgangsbohrungen vorgesehen oder werden die Einschnitte gem. Fig. 4 und 5 durch eine Durchfräsung 10 gebildet, dann wird gem. Fig. 4 das Dichtelement als Scheibe 11 ausgebildet. Bezüglich deren Aussendurchmesser gilt das Gleiche wie in Zusammenhang mit Fig. 1 ausgeführt. Die Scheibe 11 ist auf die Stirnseite 7 aufgesetzt, entsprechend dem flachen Dichtring 8 der Fig. 1.

Bei der Ausführungsform nach den Fig. 6 bis 8 werden die Einschnitte gebildet durch zwei axial verlaufende Nuten 12. Am vorderen Ende der Nuten 12 sind in diese Dichtelemente 13 eingesetzt. Die Dichtelemente 13 weisen Lippen 14 auf, welche in Umfangsrichtung die Nuten 12 übergreifen. Diese Lippen können auch ringförmig miteinander verbunden sein, entsprechend dem Ring 9 der Fig. 3.

Die Dichtelemente 8, 9, 11, 13 bestehen aus einem elastisch verformbaren Material oder aus einem gut plastisch verformbaren Material. Bevorzugt bestehen sie aus einem gummielastischen Material, jedoch ist auch die Verwendung von sehr weichen Metallen bzw. Metallegierungen möglich.

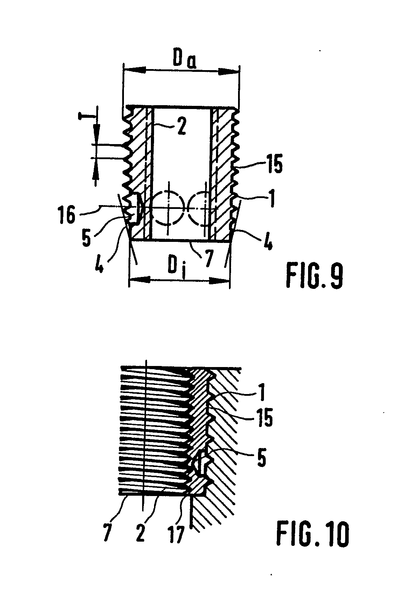

Die Verhältnisse beim Gewindeeinsatz nach den Fig. 9 und 10, der ohne Dichtelement auskommt, bedürfen einer besonderen Betrachtung.

Praktische Versuche haben gezeigt, dass bei nur drei als Sackbohrungen 5 ausgebildeten Schneidbohrungen die Gefahr erhöht wird, dass sich die Späne in den Schneidbohrungen abstützen und den weiteren Eindrehvorgang blockieren. Obwohl das Volumen der Schneidbohrungen theoretisch ausreichen würde, die entstehenden Späne aufzunehmen, wenn die drei Schneidbohrungen als Sackbohrungen 5 ausgebildet sind, zeigt sich insbesondere bei Aufnahmebohrungen, deren Wandungen aus einem relativ harten Werkstoff bestehen, dass das vorgenannte Volumen nicht ausreicht, da die sich bildenden Späne relativ unbiegsam und steif sind.

Werden dagegen als Schneidbohrungen fünf Sackbohrungen 5 vorgesehen, dann sind die von den Gewindeschneidkanten ausgeschnittenen Späne dünn und daher biegsam. Sie haben nicht die Stabilität, sich in den Schneidbohrungen abzustützen und fügen sich in den Schneidbohrungen eng aneinander. Das Volumen der fünf Sackbohrungen ist in jedem Fall ausreichend, das gesamte Spanvolumen aufzunehmen. Da von jeder Schneidkante dünne Späne aus der Aufnahmebohrung ausgeschnitten werden, können die Einsätze schnell und unter Anwendung eines geringeren Drehmoments in die Aufnahmebohrungen eingedreht werden. Im Vergleich zu drei Schneidbohrungen wird die Länge der Gewindeschneidkanten um etwa 66% vergrössert. Gleiches gilt für das Volumen der Schneidbohrungen welche als Spänestauraum dient.

Infolge der Vergrösserung der Länge der Gewindeschneidkanten um rund 66% ist es möglich, anstelle des seitherigen eingängigen Aussengewindes ein mehrgängiges Aussengewinde, insbesondere ein zweigängiges vorzusehen.

Durch das Vorsehen von mindestens fünf Schneidbohrungen 5 ist es auch möglich, dass das Aussengewinde einen zylindrischen Gewindegrund aufweist. Dies führt dazu, dass im Gegensatz zu einem voll ausgebildeten Aussengewinde die Spanmenge verringert wird, wodurch wiederum die Eindrehgeschwindigkeit erhöht wird. Weist der Gewindeeinsatz ein Innengewinde auf, wird zusätzlich der Vorteil erreicht, dass die Wanddicke zwischen Innen- und Aussengewinde erhöht wird.

Besonders günstige Verhältnisse ergeben sich, wenn zwischen dem Aussengewinde und der Schneidbohrung bestimmte Relationen eingehalten werden. Die nachfolgend genannten Relationen gelten insbesondere bei Gewindeeinsätzen mit einem Innengewinde, bei denen das Aussengewinde einen zylindrischen Gewindegrund aufweist. Der Aussendurchmesser des Aussengewindes soll etwa 3,5mal grösser sein als der Durchmesser jeder Schneidbohrung. Der zylindrische Gewindegrund des Aussengewindes soll einen etwa 3,1mal grösseren Durchmesser aufweisen als die Schneidbohrungen. Der Aussendurchmesser des Aussengewindes sollte etwa 8mal grösser sein als die Steigung des Aussengewindes. Der Durchmesser des zylindrischen Gewindegrunds des Aussengewindes sollte etwa 1,25mal grösser sein als der Aussendurchmesser des Innengewindes. Es hat sich auch als vorteilhaft gezeigt, wenn die Schneidbohrungen zur Hälfte sich im Bereich der Fase befinden, was bedeutet, dass die Achsen der Schneidbohrungen in Höhe des hinteren Endes der Fase verlaufen.

Der Gewindeeinsatz nach den Fig. 9 und 10 weist ein Innengewinde 2 und ein Aussengewinde 1 auf. Zwischen den einzelnen Gewindegängen des Aussengewindes 1 ist der Gewindegrund 15 zylindrisch ausgebildet. An der Stirnseite 7 schliesst die Fase 4 bündig mit dem zylindrischen Gewindegrund 15. Über den Umfang gleichmässig verteilt sind wiederum fünf radiale Sackbohrungen 5 vorgesehen. Die Achsen 16 der Sackbohrungen 5 verlaufen in Höhe des hinteren Endes der Fase 4, so dass die Sackbohrungen 5 mit ihrer jeweiligen unteren Hälfte im Bereich der Fase 4 sich befinden. Die Steigung des Aussengewindes ist mit T bezeichnet. Bei dem Innengewinde 2 handelt es sich um ein Normgewinde.

Bei einem praktischen Ausführungsbeispiel liegen folgende Verhältnisse vor: Das Innengewinde 2 ist ein Normgewinde M12. Das Aussengewinde 1 weist einen Aussendurchmesser $D_a$ von 16 mm auf. Dessen Innendurchmesser $D_i$, d.h. der Durchmesser des zylindrischen Gewindegrundes 15 beträgt 14,5 mm. Die Steigung T dieses Aussengewindes 1 beträgt 1,8 mm. Der Durchmesser der Sackbohrungen 5 beträgt 5 mm.

Überraschenderweis hat sich gezeigt, dass bei einem Gewindeeinsatz mit fünf Schneidbohrungen 5 gegenüber einem solchen mit drei Schneidbohrungen das zum Eindrehen erforderliche Drehmoment um etwa 1/3 geringer ist. Dieser Effekt dürfte auch darauf zurückzuführen sein, dass die Gewindeteilstücke von Schneidlochbohrung zu Schneidlochbohrung bei einem Einsatz mit fünf Schneidlochbohrungen kürzer sind als bei einem solchen mit drei Schneidlochbohrungen. Diese Gewindeteilstücke weisen nämlich in bezug auf die Schneidkanten 6 einen negativen Spanwinkel auf, der dem Eindrehen einen relativ hohen Widerstand entgegensetzt.

Ausserdem hat sich gezeigt, dass ein derartiger Gewindeeinsatz auf dem Grund oder auf einer Stufe 17 der Aufnahmebohrung verkontert werden kann, wie dies die Fig. 10 zeigt. Durch dieses Verkontern mit dem Bohrungsgrund oder einer Stufe 17 der Bohrung wird eine optimale Rückdrehsicherung erreicht. Eine solche Verkonterung ist auch ohne weiteres möglich bei den Ausführungsformen nach den Fig. 1 und 4, da der Ring 8 bzw. die Scheibe 11 deformierbar sind.

**Patentansprüche**

1. Selbstschneidender Gewindeeinsatz mit einem Aussengewinde (1), mit einer Anfasung (4) am Einsatzende (3), die das Aussengewinde (1) schneidet, sowie mit Einschnitten (5, 10, 12) im Bereich der Anfasung (4), welche Gewindeschneidkanten bilden, die beim Eindrehen des Gewindeeinsatzes in eine glatte Aufnahmebohrung dort ein Innengewinde einschneiden, der Gewindeeinsatz eine über seine ganze Länge verlaufende Bohrung mit einem Innengewinde (2) aufweist und die Einschnitte (5, 10, 12) zur Stirnseite (7) des Einsatzendes (3) hin gegen einen Spanaustritt in die Aufnahmebohrung abgeschlossen sind, dadurch gekennzeichnet, dass am vorderen Ende der Anfasung (4) mindestens ein verformbares Dichtelement (8, 9, 11, 13) angeordnet ist, das die Einschnitte (5, 10, 12) in Einsatzrichtung hin abschliesst und dessen Aussenkante auf einem Kreisdurchmesser liegt, der geringfügig kleiner ist als der Aussendurchmesser des Aussengewindes (1).

2. Gewindeeinsatz nach Anspruch 1, dadurch gekennzeichnet, dass das Dichtelement aus einem Ring (8, 9) besteht, wenn die Einschnitte (5, 12) nicht bis zum Innengewinde (2) verlaufen.

3. Gewindeeinsatz nach Anspruch 1, dadurch gekennzeichnet, dass das Dichtelement aus einer Scheibe (11) besteht, die an der Stirnseite (7) des Einsatzendes (3) angeordnet ist.

4. Gewindeeinsatz nach Anspruch 1, dadurch gekennzeichnet, dass die Einschnitte axiale Nuten (12) sind und Dichtelemente (13) am Einsatzende der Nuten (12) eingesetzt sind.

5. Gewindeeinsatz nach einem der Ansprüche 1 bis 4, dadurch gekennzeichnet, dass der Durchmesser des Kreises auf dem die Aussenkante des Dichtelements (8, 9, 11, 13) liegt, etwa 7% kleiner ist als der Durchmesser der Gewindespitzen des Aussengewindes (1).

6. Selbstschneidender Gewindeeinsatz mit einem Aussengewinde (1), mit einer Anfasung (4) am Einsatzende (3), die das Aussengewinde (1) schneidet, sowie mit Einschnitten (5, 10, 12) im Bereich der Anfasung (4), welche Gewindeschneidkanten bilden, die beim Eindrehen des Gewindeeinsatzes in eine glatte Aufnahmebohrung dort ein Innengewinde einschneiden, der Gewindeeinsatz eine über seine ganze Länge verlaufende Bohrung mit einem Innengewinde (2) aufweist und die Einschnitte (5, 10, 12) zur Stirnseite (7) des Einsatzendes (3) hin gegen einen Spanaustritt in die Aufnahmebohrung abgeschlossen sind, dadurch gekennzeichnet, dass die Einschnitte als Sackbohrungen (5) ausgebildet sind und mindestens fünf Sackbohrungen (5) gleichmässig am Umfang verteilt vorgesehen sind.

7. Gewindeeinsatz nach Anspruch 6, dadurch gekennzeichnet, dass das Aussengewinde (2) einen zylindrischen Gewindegrund (15) aufweist.

8. Gewindeeinsatz nach Anspruch 6 oder 7, dadurch gekennzeichnet, dass der Aussendurchmesser ($D_a$) des Aussengewindes (1) sich zm Durchmesser der Sackbohrungen (5) etwa wie 3,5 : 1 verhält.

9. Gewindeeinsatz nach Anspruch 8, dadurch gekennzeichnet, dass der Innendurchmesser ($D_i$) des Aussengewindes (1) sich zum Durchmesser der Sackbohrungen (5) etwa wie 3,1 : 1 verhält.

10. Gewindeeinsatz nach Anspruch 9, dadurch gekennzeichnet, dass der Innendurchmesser ($D_i$) des Aussengewindes (1) sich zum Aussendurchmesser des Innengewindes (2) des Gewindeeinsatzes etwa wie 1,25 : 1 verhält.

11. Gewindeeinsatz nach einem der Ansprüche 6 bis 10, dadurch gekennzeichnet, dass die Achsen der Sackbohrungen (5) in Höhe des hinteren Endes der Anfasung (4) verlaufen.

12. Gewindeeinsatz nach Anspruch 8, dadurch gekennzeichnet, dass der Aussendurchmesser ($D_a$) des Aussengewindes (1) sich zu dessen Steigung (T) etwa wie 8 : 1 verhält.

**Claims**

1. Self-tapping insert having an external thread (1), a chamfer (4) at the end of the insert (3), which cuts the external thread (1), and also having notches (5, 10, 12) in the region of the chamfer which form thread-cutting edges which cut an internal thread there in a smooth receiving bore when the insert is tapped, the inset has a bore passing over its entire length having an internal thread (2) and the notches (5, 10, 12) at the front side (7) of the insert end (3) are sealed against the escape of chips into the bore, characterised in that at the front end of the chamfer (4) at least one deformable sealing element (8, 9, 11, 13) is disposed, which seats the notches (5, 10, 12) in the insert direction and the outer edge of which lies on a diameter which is slightly smaller than the external diameter of the external thread (1).

2. Insert according to Claim 1, characterised in that the sealing element consists of a ring (8, 9) if the notches (5, 12) do not come as far as the internal thread (2).

3. Insert according to Claim 1, characterized in that the sealing element consists of a gasket (11) which is disposed at the front side (7) of the end (3) of the insert.

4. Insert according to Claim 1, characterized in that the notches are axial grooves (12) and sealing elements (13) are inserted at the insert end of the grooves (12).

5. Insert according to one of Claims 1 to 4, characterised in that the diameter of the circle lies on that of the outer edge of the sealing element (8, 9, 11, 13), and is approx. 7% smaller than the diameter of the thread crests of the external thread (1).

6. Self-tapping insert having an external thread (1), a chamfer (4) at the end (3) of the insert, which cuts the external thread (1), and also having notches (5, 10, 12) in the region of the chamfer (4) which form thread-cutting edges which cut an internal thread there in a smooth receiving bore when the insert is tapped, the insert has a bore over its entire length with an internal thread (2) and the notches (5, 10, 12) at the front side (7) of the insert end (3) are sealed against the escape of chips into the bore, characterised in that the notches are constructed as blind-end bores (5) and at least five blind-end bores (5) are provided spaced regularly over the circumference.

7. Insert according to Claim 6, characterised in that the external thread (2) has a cylindrical base (15).

8. Insert according to Claim 6 or 7, characterised in that the ratio of the external diameter $(D_a)$ of the external thread (1) to the diameter of the blind-end bores (5) is approx. 3.5 : 1.

9. Insert according to Claim 8, characterised in that the ratio of the internal diameter $(D_i)$ of the external thread (1) to the external diameter of the internal thread (2) is approx. 1.25 : 1.

10. Insert according to Claim 9, characterized in that the ratio of the internal diameter $(D_i)$ of the external thread (1) to the external diameter of the internal thread (2) of the insert is approx. 1.25 : 1.

11. Insert according to one of Claims 6 to 10, characterised in that the axes of the blind-end bores (5) are on the level of the lower end of the chamfer (4).

12. Insert according to Claim 8, characterised in that the ratio of the external diameter $(D_a)$ of the external thread (1) to its pitch is approx. 8 : 1.

## Revendications

1. Taraud à coupe automatique et filet extérieur (1) présentant sur sa partie taraudeuse (3) un biseau (4) qui coupe le filet extérieur (1) et qui comporte également des entailles (5, 10, 12); ces entailles forment les arêtes coupantes du filet qui taillent un filet intérieur dans un alésage de réception lisse lorsqu'on y fait tourner le taraud. Le taraud comporte un taraudage avec filet intérieur (2) sur toute sa longueur; les entailles (5, 10, 12) vers l'extrémité (7) de la partie taradeuse (3) sont fermées et ont pour fonction d'empêcher l'entrée de copeaux dans l'alésage de réception; ce taraud est caractérisé en ce que l'extrémité inférieure du biseau (4) comporte au moins un élément d'étanchéité malléable (8, 9, 11, 13) qui ferme les entailles (5, 10, 12) dans le sens du taraud et dont les bords extérieurs se trouvent sur un cercle de diamètre peu inférieur au diamètre extérieur du filet extérieur (1).

2. Taraud selon la revendication 1, caractérisé en ce que l'élément d'étanchéité est en forme d'anneau (8, 9) dans le cas où les entailles (5, 12) ne continuent pas jusqu'au filet intérieur (2).

3. Taraud selon la revendication 1, caractérisé en ce que l'élément d'étanchéité est sous forme de rondelle (11) monté sur l'extrémité (7) de la partie taraudeuse (3).

4. Taraud selon la revendication 1, caractérisé en ce que les entailles sont sous forme de rainures axiales (12) et que la partie taraudeuse de ces rainures (12) comporte des éléments d'étanchéité (13).

5. Taraud selon les revendications 1 à 4, caractérisé en ce que le diamètre du cercle, sur lequel se trouvent les bords extérieurs des éléments d'étanchéité (8, 9, 10, 13) est d'environ 7% inférieur au diamètre des sommets du filet extérieur (1).

6. Taraud à coupe automatique et filet extérieur (1) présentant sur sa partie taraudeuse (3) un biseau (4) qui coupe le filet extérieur (1) et qui comporte également des entailles (5, 10, 12); ces entailles forment les arêtes coupantes du filet qui taillent un filet intérieur dans un alésage de réception lisse lorsqu'on y fait tourner le taraud; le taraud comporte un taraudage avec filet intérieur (2) sur toute sa longueur; les entailles (5, 10, 12) vers l'extrémité (7) de la partie taraudeuse (3 sont fermées et ont pour fonction d'empêcher l'entrée de copeaux dans l'alésage de réception; ce taraud est caractérisé en ce que les entailles sont sous forme d'alésage en forme de trous borgnes (5) et qu'il existe au moins cinq alésages (5) disposées de façon régulière sur le périmètre.

7. Taraud selon la revendication 6, caractérisé en ce que le filet extérieur (2) comporte un fond de filet (15) cylindrique.

8. Taraud selon les revendications 6 ou 7, caractérisé en ce que le diamètre extérieur $(D_a)$ du filet extérieur (1) et le diamètre de alésages en forme de trous borgnes (5) sont approximativement de rapport 3,5 : 1.

9. Taraud selon la revendication 8, caractérisé en ce que le diamètre interne $(D_i)$ du filet extérieur (1) et le diamètre des alésages en forme de trous borgnes (5) sont approximativement de rapport 3,1 : 1.

10. Taraud selon la revendication 9, caractérisé en ce que le diamètre intérieur $(D_i)$ de son filet extérieur (1) et le diamètre extérieur de son filet intérieur (2) sont approximativement de rapport 1,25 : 1.

11. Taraud selon l'une quelconque des revendications 6 à 10, caractérisé en ce que les axes des alésages en forme de trous borgnes (5) se trouvent à la hauteur de l'extrémité arrière du biseau (4).

12. Taraud selon la revendication 8, caractérisé en ce que le diamètre extérieur $(D_a)$ et le pas (T) du filelt extérieur (1) sont approximativement de rapport 8 : 1.

FIG. 1

FIG. 2

FIG. 3

FIG. 5

FIG. 4

FIG. 7

FIG. 6

FIG. 8

**FIG.9**

**FIG.10**